# EUROPEAN PATENT APPLICATION

(11) **EP 2 369 458 A1**
(43) Date of publication of application: **28.09.2011**
(21) Application number: 10156706.3
(22) Date of filing: 17.03.2010
(51) Int. Cl.: G06F 3/048

(54) **Display method and electronic device for using the same**

(30) Priority: 24.02.2010 US 711261
(71) Applicant: HTC Corporation, Taoyuan County 330 (TW)
(72) Inventor: Bamford, Drew, Bellevue, WA 98005 (US); Brinda, David, Bellevue, WA 98005 (US); Cielak, Matthew Joseph, Bellevue, WA 98005 (US); Huang, Sheng-Hsin, Taoyuan County 330 (TW)
(74) Representative: 2K Patentanwälte Blasberg Kewitz & Reichel

(57) **Abstract**

The invention provides a display method for an electronic device. The electronic device has a display panel displaying at least one of a plurality of pages of contents and the pages of contents are contiguously arranged in a page flow. The display method comprising receiving a zoom-out signal and resizing the pages of contents to be a plurality of thumbnail images respectively according to the zoom-out signal and displaying the thumbnail images on the display panel of the electronic device.

## Description

### BACKGROUND OF THE INVENTION

### Field of Invention

The present invention relates to an operating method and an electronic device for using the same. More particularly, the present invention relates to a display method and an electronic device for using the same.

### Description of Related Art

With the advancement of the portable electronic devices, the functionalities of the portable electronic device are various. The portable electronic devices such as the mobile phone, the personal digital assistant (PDA) or digital camera, sometimes, possess multiple functions. For instance, the mobile phone or the PDA not only provides the simple telecommunication function but also supports the short message transmission and receiving functions while the user is not available for answering the incoming calls immediately. Besides, the portable electronic device can further stores and plays multimedia files and provide the user an editable calendar for recording miscellaneous notes or agenda.

However, conventionally, the commonly used function, the commonly used applications, the home screen, the calendar and the contact list are displayed on the screen of the electronic device in forms of pages of contents arranged in a page flow or in forms of tabs arranged in a tab list at the bottom of the main desktop frame. It is highly possible that the user needs to roll over the page flow or the tab list to find out the page of content or the tab to be select. In other words, with the increasing variety of functions of the electronic devices, it is not easy for the user to target the page of content or the tab as quickly as the user wants. Also, it is not easy for the user to quickly switch between two pages of contents while the two pages of contents are not contiguous to each other in the page flow. Thus, it is not convenient for the user to operate the electronic device. Hence, the practicability of the electronic device is decreased.

### SUMMARY OF THE INVENTION

Accordingly, the present invention provides a display method capable of simplifying the operation of the electronic device.

The present invention further provides an electronic device with a relatively high practicability.

The invention provides a display method for an electronic device. The electronic device has a display panel displaying at least one of a plurality of pages of contents and the pages of contents are contiguously arranged in a page flow. The display method comprising receiving a zoom-out signal and resizing the pages of contents to be a plurality of thumbnail images respectively according to the zoom-out signal and displaying the thumbnail images on the display panel of the electronic device.

According to one embodiment of the present invention, the step of resizing the pages of contents further comprises zooming out the displayed page of content towards to a predetermined position on the display panel.

According to one embodiment of the present invention, the zoom-out signal is generated according to a pinch gesture on a touch panel of the electronic device corresponding to the displayed page of content displayed on the display panel.

According to one embodiment of the present invention, the pages of contents are contiguously arranged in the page flow in an arranging order, and the thumbnail images displayed on the display panel are arranged according to the arranging order of the pages of contents.

According to one embodiment of the present invention, when the thumbnail images are displayed on the display panel, the display method further comprises receiving a dragging signal for dragging one of the thumbnail images and moving the dragged thumbnail image to be around any one of rest of the thumbnail images according to the dragging signal so as to change the arranging order.

According to one embodiment of the present invention, the dragging signal is generated by a dragging gesture on a touch panel of the electronic device.

According to one embodiment of the present invention, when the thumbnail images are displayed on the display panel according to the arranging order, the display method further comprises receiving a selecting signal for selecting one of the thumbnail images, resizing the thumbnail images to be the pages of contents respectively and displaying one of the pages of contents on the display panel according to the selecting signal, wherein the displayed page of content corresponds to the selected thumbnail image and the pages of contents are contiguously arranged in the page flow according to the arranging order.

According to one embodiment of the present invention, the pages of contents include a home screen frame, a desktop frame or an application frame.

The invention also provides a display method for an electronic device. The electronic device has a display panel displaying a plurality of thumbnail images, the thumbnail images respectively correspond a plurality of pages of contents and the thumbnail images displayed on the display panel are arranged according to an arranging order. The display method comprising receiving a dragging for dragging one of the thumbnail images and moving the dragged thumbnail image to be around any one of rest of the thumbnail images according to the dragging signal so as to change the arranging order.

According to one embodiment of the present invention, when the thumbnail images are displayed on the display panel according to the arranging order, the display method further comprises receiving a selecting signal for selecting one of the thumbnail images, resizing the thumbnail images to be the pages of contents respectively and displaying one of the pages of contents on the display panel according to the selecting signal, wherein the displayed page of content corresponds to the selected thumbnail image and the pages of contents are contiguously arranged in a page flow according to the changed arranging order.

According to one embodiment of the present invention, when one of the pages of contents is displayed on the display panel and the pages of contents are contiguously arranged in a page flow according to the arranging order, the display method further comprises receiving a zoom-out signal, resizing the pages of contents to be the thumbnail images respectively according to the zoom-out signal and displaying the thumbnail images on the display panel of the electronic device according to the arranging order.

According to one embodiment of the present invention, the step of resizing the pages of contents further comprises zooming out the displayed page of content towards to a predetermined position on the display panel.

According to one embodiment of the present invention, the zoom-out signal is generated according to a pinch gesture on a touch panel of the electronic device corresponding to the displayed page of content displayed on the display panel.

According to one embodiment of the present invention, the dragging signal is generated by a dragging gesture on a touch panel of the electronic device.

According to one embodiment of the present invention, the pages of contents include a home screen frame, a desktop frame or an application frame.

The invention further provides an electronic device. The electronic device comprises a display panel, a touch sensing module, an image resizing module and a displaying module. The display panel is used for displaying at least one of a plurality of pages of contents, wherein the pages of contents are contiguously arranged in a page flow. The touch sensing module is used for receiving a zoom-out signal. The image resizing module is used for resizing the pages of contents to be a plurality of thumbnail images respectively according to the zoom-out signal. The displaying module is used for displaying the thumbnail images on the display panel of the electronic device.

According to one embodiment of the present invention, while resizing the pages of contents, the image resizing module further zooming out the displayed page of content towards to a predetermined position on the display panel.

According to one embodiment of the present invention, the zoom-out signal is generated according to a pinch gesture on the touch sensing module corresponding to the displayed page of content displayed on the display panel.

According to one embodiment of the present invention, the pages of contents are contiguously arranged in the page flow in an arranging order, and the thumbnail images displayed on the display panel are arranged according to the arranging order of the pages of contents.

According to one embodiment of the present invention, when the thumbnail images are displayed on the display panel according to the arranging order of the pages of contents and the touch sensing module further receives a dragging signal for dragging one of the thumbnail images, the electronic device further comprises a sorting module for changing the arranging order when the dragged thumbnail image is moved to be around any one of rest of the thumbnail images according to the dragging signal.

According to one embodiment of the present invention, the dragging signal is generated by a dragging gesture on the touch sensing module.

According to one embodiment of the present invention, when the thumbnail images are displayed on the display panel according to the arranging order, the touch sensing module further receives a selecting signal for selecting one of the thumbnail images, the image resizing module resizes in the thumbnail images to be the pages of contents respectively according to the selecting signal and the displaying module displays one of the pages of contents on the display panel according to the selecting signal, wherein the displayed page of content corresponds to the selected thumbnail image and the pages of contents are contiguously arranged in the page flow according to the arranging order.

The invention provides an electronic device. The electronic device comprises a display panel, a touch sensing module and a sorting module. The display panel is used for displaying a plurality of thumbnail images, wherein the thumbnail images respectively correspond a plurality of pages of contents and the thumbnail images displayed on the display panel are arranged according to an arranging order. The touch sensing module is used for receiving a dragging for dragging one of the thumbnail images. The sorting module is used for changing the arranging order when the dragged thumbnail image is moved to be around any one of rest of the thumbnail images according to the dragging signal.

According to one embodiment of the present invention, when the thumbnail images are displayed on the display panel according to the arranging order and the touch sensing module further receives a selecting signal for selecting one of the thumbnail images, the electronic device further comprises an image resizing module and a displaying module. The image resizing module is used for resizing the thumbnail images to be the pages of contents respectively. The displaying module is used for displaying one of the pages of contents on the display panel according to the selecting signal, wherein the displayed page of content corresponds to the selected thumbnail image and the pages of contents are contiguously arranged in a page flow according to the changed arranging order.

According to one embodiment of the present invention, when one of the pages of contents is displayed on the display panel and the pages of contents are contiguously arranged in a page flow according to the arranging order, the touch sensing module further receives a zoom-out signal, the image resizing module resizes the pages of contents to be the thumbnail images respectively according to the zoom-out signal and the displaying module displays the thumbnail images on the display panel of the electronic device according to the arranging order.

According to one embodiment of the present invention, while resizing the pages of contents, the image resizing module further zooms out the displayed page of content towards to a predetermined position on the display panel.

According to one embodiment of the present invention, the zoom-out signal is generated according to a pinch gesture on a touch panel of the electronic device corresponding to the displayed page of content displayed on the display panel.

According to one embodiment of the present invention, the dragging signal is generated by a dragging gesture on a touch panel of the electronic device.

In the present invention, the displayed page of content is resized according to a zoom-out signal and then the thumbnail images respectively corresponding to the pages of contents contiguously arranged in the page flow are displayed in the same display region of the display panel. By comparing with the conventional page browsing method in which the user needs to roll over almost all pages of contents to select one of them, it is convenient for the user to select one of the pages of contents in forms of thumbnail images at the same frame. Furthermore, by easily dragging the thumbnail images to a new position around the other thumbnail images in the display region of the display panel, the arranging order of the pages of contents in the page flow can be changed. Hence, the operation for rearranging the pages of contents is simplified.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 is a block diagram schematically showing an electronic device according to one embodiment of the invention.

Fig. 2 is a flow chart showing a display method for an electronic device according to one embodiment of the invention.

Figs. 3A through 3D are schematic views showing the dynamic changing of the frame displayed on the display panel of the electronic device according to the display method shown in Fig .2.

Fig. 4 is a flow chart showing a display method for an electronic device according to another embodiment of the invention.

Fig. 5 is a flow chart showing a display method for an electronic device according to the other embodiment of the invention.

### DESCRIPTION OF THE EMBODIMENTS

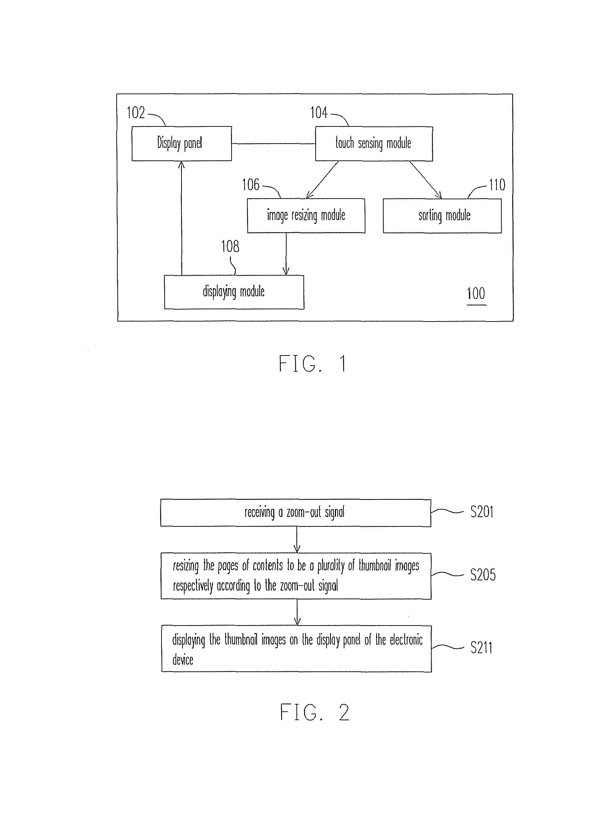

Fig. 1 is a block diagram schematically showing an electronic device according to one embodiment of the invention. As shown in Fig. 1, an electronic device 100 of the present embodiment comprises a display panel 102, a touch sensing module 104, an image resizing module 106 and a displaying module 108. Further, the electronic device 100 can also comprises a sorting module 110. The electronic device 100 can be, for example but not limited to, a personal computer (PC), a mobile phone, a smart phone, a personal digital assistant, a palmtop play station (such as PSP/GBA), a MP4/PMP player, a digital camera, a tablet PC, or a notebook computer, and the scope thereof is not limited herein. It should be noticed that the display panel 102 can be integrated with the touch sensing module 104 to be a touch panel.

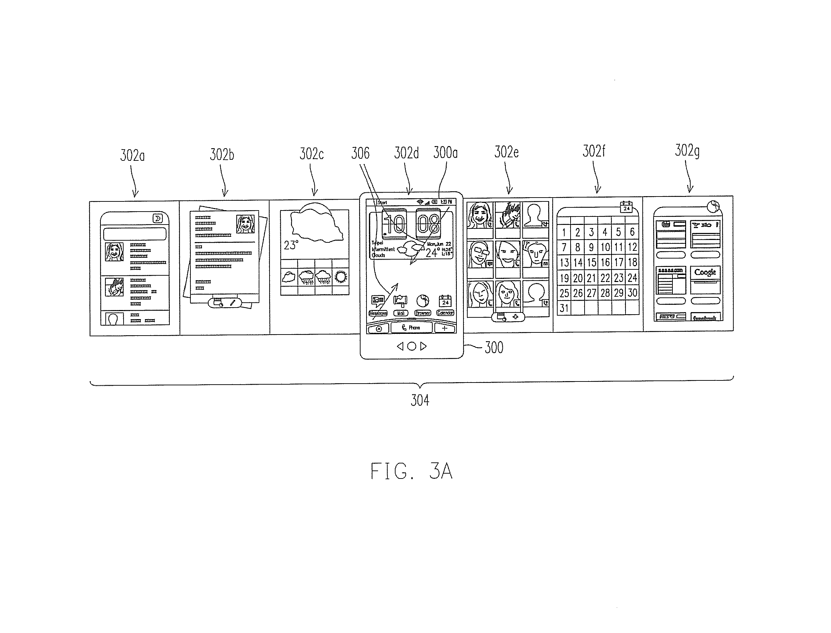

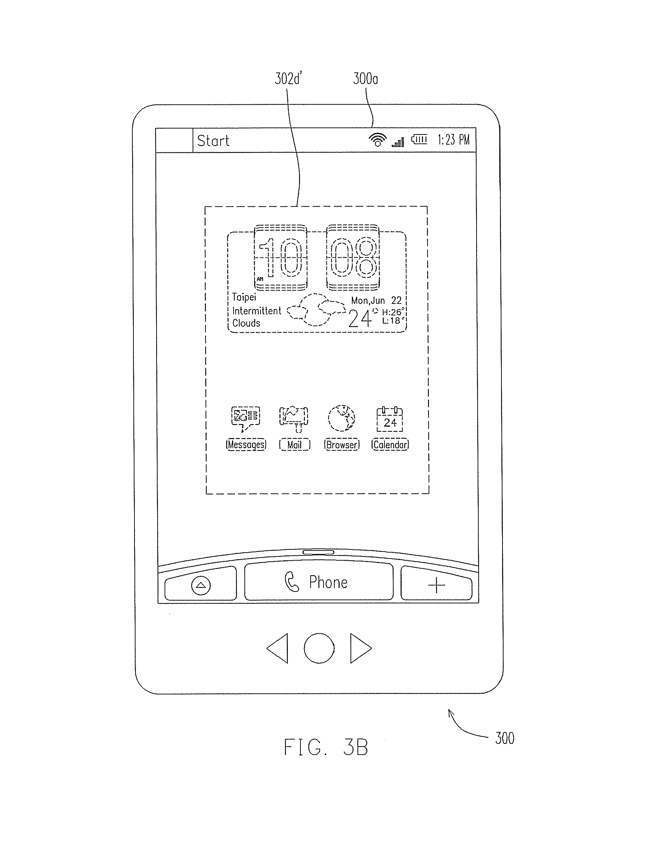

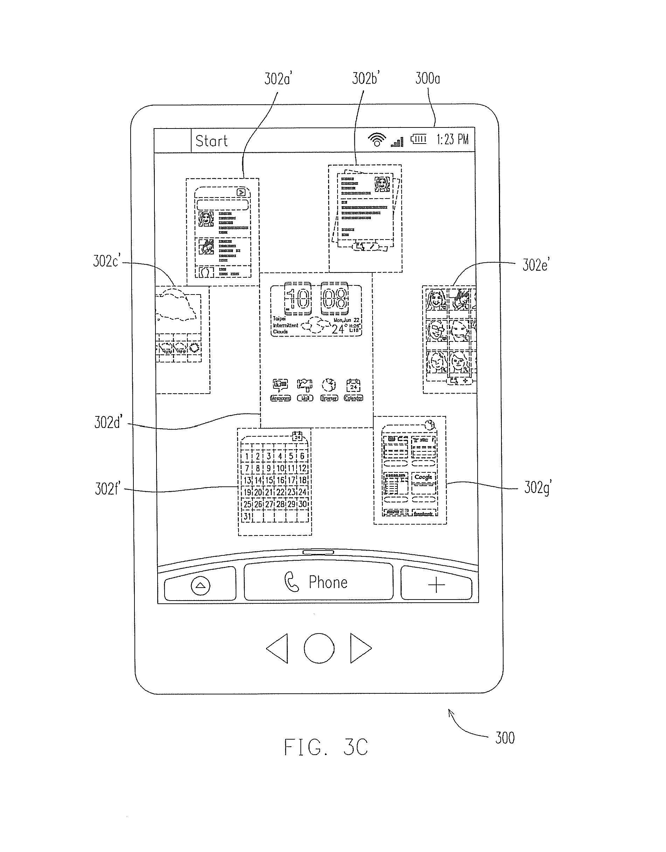

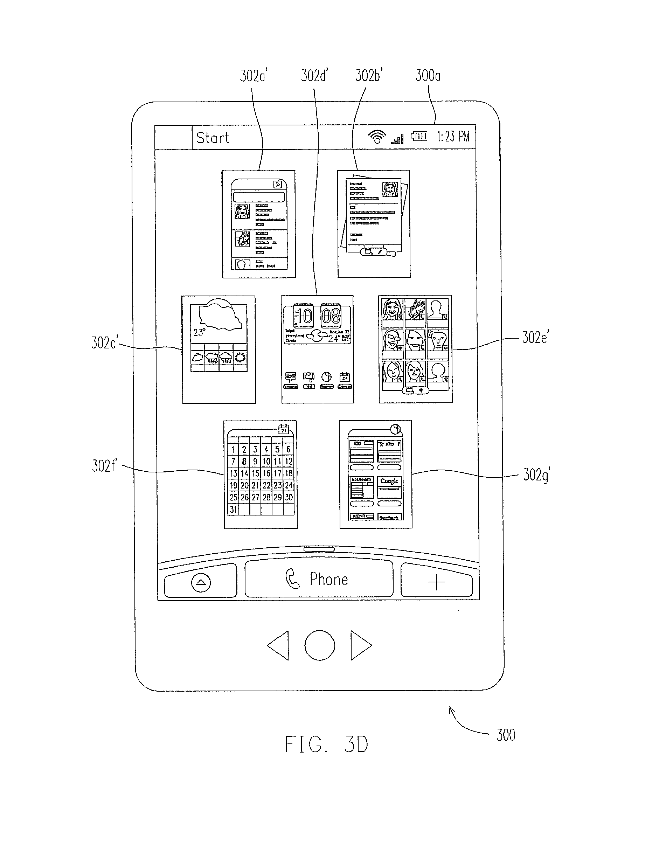

Fig. 2 is a flow chart showing a display method for an electronic device according to one embodiment of the invention. Figs. 3A through 3D are schematic views showing the dynamic changing of the frame displayed on the display panel of the electronic device according to the display method shown in Fig .2. As shown in Fig. 1, Fig. 2 and Fig. 3A, the display panel 102 displays at least one of a plurality of pages of contents such as pages of contents 302a, 302b, 302c, 302d, 302e, 302f and 302g. For instance, as shown in Fig. 3A, the display panel 300a of the electronic device 300 which is a portable phone, for example, displays the page of content 302d. More specifically, the pages of contents 302a, 302b, 302c, 302d, 302e, 302f and 302g are contiguously arranged in a page flow 304 and only page of content 302d is displayed by the display panel 300a. Noticeably, each of the pages of contents 302a, 302b, 302c, 302d, 302e, 302f and 302g can be, for example, a home screen frame, a desktop frame, an application frame or even a simple blank page without indicating any corresponding theme. Although, in the present embodiment, the number of the contiguous pages of contents is seven, the number of the pages of contents can be customized according the practical requirements and the present invention is not limited thereto.

Then, as shown in Fig. 1, Fig. 2 and Fig. 3A, in the step S201, the touch sensing module 104 receives a resizing signal such as a zoom-out signal. In the present embodiment, as shown in Fig. 3A, the zoom-out signal is generated according to a pinch gesture 306 on the touch sensing module 104 (not shown in Fig. 3A) integrated with the display panel 300a. More specifically, the pinch gesture 306 comprises of two sub-gestures towards to each other along a diagonal line of the page of content 302d displayed on the display panel 300a. The zoom-out signal generated according to the pinch gesture 306 is only an exemplar of the present invention and is not used to limit the scope of the present invention. That is, in the other embodiments not shown in the drawings, the zoom-out signal can be, for example, generated by any form of input method such as shaking the electronic device 100 in a specific angle or pressing a physical key on the electronic device or a virtual key displayed by the display panel.

Moreover, as shown in Fig. 1, Fig. 2, Fig. 3B and Fig. 3C, in the step S205, the image resizing module 106 resizes the pages of contents 302a, 302b, 302c, 302d, 302e, 302f and 302g to be a plurality of thumbnail images 302a', 302b', 302c', 302d', 302e', 302f' and 302g' respectively according to the zoom-out signal. It should be noticed that, while resizing the pages of contents 302a, 302b, 302c, 302d, 302e, 302f and 302g, the image resizing module 106 further resizing the displayed page of content 302d towards to a predetermined position on the display panel 300a.

More specifically, in the present embodiment, the pages of contents 302a, 302b, 302c, 302d, 302e, 302f and 302g are contiguously arranged in the page flow 304 in an arranging order so that the thumbnail images 302a', 302b', 302c', 302d', 302e', 302f' and 302g' displayed on the display panel are arranged according to the arranging order of the pages of contents. That is, at the time the resizing module 106 resizes each of the pages of contents 302a, 302b, 302c, 302d, 302e, 302f and 302g to be the thumbnail images 302a', 302b', 302c', 302d', 302e', 302f' and 302g', each of the pages of contents 302a, 302b, 302c, 302d, 302e, 302f and 302g is resized to a corresponding predetermined position so that the thumbnail images 302a', 302b', 302c', 302d', 302e', 302f' and 302g' displayed on the display panel are arranged according to the arranging order of the pages of contents 302a, 302b, 302c, 302d, 302e, 302f and 302g contiguously arranged in the page flow 304. In other words, each of the thumbnail images respectively corresponds to a specific deployed position on the display panel 300a according to the arranging order of the pages of contents 302a, 302b, 302c, 302d, 302e, 302f and 302g in the page flow 304y.

For instance, the displayed page of content 302d is the fourth page in the page flow 304. Hence, the thumbnail image corresponding to the page of content 302d is arranged to be at the fourth position among the thumbnail positions on the display panel 300a counting from the top to the bottom and from the left to the right of the display panel 300a. In other words, the displayed page of content 302d is located between the pages of contents 302c and 302e in the page flow 304 so that the thumbnail image corresponding to the page of content 302d is also located between the thumbnail images corresponding to the pages of contents 302c and 302e respectively.

Furthermore, as shown in Fig. 1, Fig. 2 and Fig. 3D, in the step S211, the displaying module 108 displays the thumbnail images 302a', 302b', 302c', 302d', 302e', 302f' and 302g' on the display panel of the electronic device.

Noticeably, in the present invention, although some of the pages of contents are not displayed by the display module 108 at a page displaying mode in which the display module 108 displays at least one of the pages of contents, the thumbnail images of all of the pages of contents are displayed in the same frame by the display module 108 at a thumbnail displaying mode in which the pages of contents are resized to be the thumbnail images respectively.

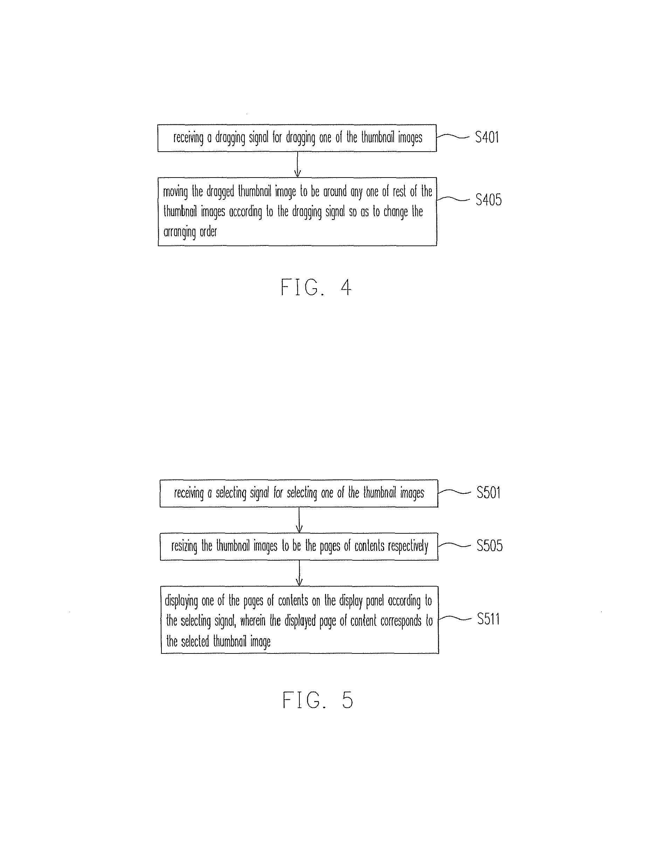

Moreover, it should be noticed that the arranging order of the pages of contents in the page flow can be changed through changing the arrangement of the thumbnail images. The following description accompanying with Fig. 4 details the steps for changing the arranging order of the pages of contents in the page flow by rearranging the thumbnail images.

Fig. 4 is a flow chart showing a display method for an electronic device according to another embodiment of the invention. As shown in Fig. 4, in the present embodiment, when the thumbnail images 302a', 302b', 302c', 302d', 302e', 302f' and 302g' are displayed on the display panel 300a according to the arranging order of the pages of contents 302a, 302b, 302c, 302d, 302e, 302f and 302g, the touch sensing module 104 further receives a dragging signal for dragging one of the thumbnail images 302a', 302b', 302c', 302d', 302e', 302f' and 302g' (step S401). Thereafter, the sorting module 110 changes the arranging order when the dragged thumbnail image is moved to be around any one of rest of the thumbnail images according to the dragging signal (step S405). That is, in the present embodiment, by dragging one of the thumbnail images to be around any other thumbnail images, the thumbnail images displayed on the display panel are rearranged.

Noticeably, the dragging signal is generated by a dragging gesture on the touch sensing module 104 of the electronic device 100. More specifically, the dragging gesture is initiated at a location of the touch sensing module 104 corresponding to one of the thumbnail images so that the thumbnail image corresponding to the location is dragged according to the dragging signal. Also, the dragging signal generated on the touch sensing module 104 is only an exemplar of the present invention and is not used to limit the scope of the present invention. That is, in the other embodiments, the dragging signal can be, for example, generated by any form of input method such as pressing a physical key on the electronic device or a virtual key displayed by the display panel.

Furthermore, the following description accompanying with Fig. 5 details the steps for switching the displaying mode from displaying all of the thumbnail images in the same frame (i.e. the thumbnail displaying mode) to displaying at least one of the pages of contents in the page flow (i.e. the page displaying mode). Fig. 5 is a flow chart showing a display method for an electronic device according to the other embodiment of the invention. As shown in Fig. 5, when the thumbnail images 302a', 302b', 302c', 302d', 302e', 302f' and 302g' are displayed on the display panel 102 according to the arranging order, the touch sensing module 104 receives a selecting signal for selecting one of the thumbnail images (step S501). Thereafter, the image resizing module 106 resizes the thumbnail images to be the pages of contents respectively according to the selecting signal (step S505). Then, the displaying module 108 displays at least one of the pages of contents on the display panel according to the selecting signal (step S511).

It should be noticed that the displayed page of content corresponds to the selected thumbnail image and the pages of contents are contiguously arranged in the page flow according to the arranging order. In one embodiment, when the steps for switching the displaying mode from the thumbnail displaying mode the page displaying mode after the sorting module 110 changes the arranging order shown in step S405, the pages of contents are contiguously arranged in the page flow according to the changed arranging order after the displaying mode is switched from the thumbnail displaying mode to the page displaying mode. In addition, the selecting signal is generated at a location of the touch sensing module 104 corresponding to one of the thumbnail images so that the thumbnail image corresponding to the location is selected to be resized to the page of content displayed on the display panel 102. Also, the selecting signal generated at a location of the touch sensing module 104 is only an exemplar of the present invention and is not used to limit the scope of the present invention. That is, in the other embodiments, the selecting signal can be, for example, generated by any form of input method such as pressing a physical key on the electronic device or a virtual key displayed by the display panel.

In the present invention, the displayed page of content is resized according to a zoom-out signal and then the thumbnail images respectively corresponding to the pages of contents contiguously arranged in the page flow are displayed in the same display region of the display panel. That is, the user can easily browse all of the pages of contents in the forms of thumbnail images arranging in the same display region of the display panel. Thus, by comparing with the conventional page browsing method in which the user needs to roll over almost all pages of contents to select one of them, it is convenient for the user to select to expand one of thumbnail images in order to select the corresponding page of content. Furthermore, by easily dragging the thumbnail images from the original arranged position to a new position around the other thumbnail images in the display region of the display panel, the arranging order of the pages of contents in the page flow can be changed. Hence, the operation for rearranging the pages of contents is simplified.

It will be apparent to those skilled in the art that various modifications and variations can be made to the structure of the present invention without departing from the scope or spirit of the invention. In view of the foregoing descriptions, it is intended that the present invention covers modifications and variations of this invention if they fall within the scope of the following claims and their equivalents.

## Claims

1. A display method for an electronic device (100), wherein the electronic device (100) has a display panel (102) displaying at least one of a plurality of pages of contents, and the display method comprising:
receiving a zoom-out signal;
resizing the pages of contents to be a plurality of thumbnail images respectively according to the zoom-out signal; and
displaying the thumbnail images on the display panel (102) of the electronic device (100).

2. The display method of claim 1, wherein the step of resizing the pages of contents further comprises zooming out the displayed page of content towards to a predetermine position on the display panel (102).

3. The display method of claim 1 or 2, wherein the zoom-out signal is generated according to a pinch gesture on a touch sensing module (104) of the electronic device (100) corresponding to the displayed page of content displayed on the display panel (102).

4. The display method of any of the preceding claims, wherein the pages of contents are contiguously arranged in a page flow (304) in an arranging order, and the thumbnail images displayed on the display panel (102) are arranged according to the arranging order of the pages of contents.

5. The display method of claim 4, when the thumbnail images are displayed on the display panel (102), further comprising:
receiving a dragging signal for dragging one of the thumbnail images; and
moving the dragged thumbnail image to be around any one of rest of the thumbnail images according to the dragging signal so as to change the arranging order.

6. The display method of claim 5, wherein the dragging signal is generated by a dragging gesture on a touch sensing module (104) of the electronic device (100).

7. The display method of claim 4, when the thumbnail images are displayed on the display panel (102) according to the arranging order, further comprising:
receiving a selecting signal for selecting one of the thumbnail images;
resizing the thumbnail images to be the pages of contents respectively; and
displaying one of the pages of contents on the display panel according to the selecting signal, wherein the displayed page of content corresponds to the selected thumbnail image and the pages of contents are contiguously arranged in the page flow (304) according to the arranging order.

8. The display method of any of the preceding claims, wherein the pages of contents include a home screen frame, a desktop frame or an application frame.

9. An electronic device (100), comprising:
a display panel (102) for displaying at least one of a plurality of pages of contents;
a touch sensing module (104) for receiving a zoom-out signal;
an image resizing module (106) for resizing the pages of contents to be a plurality of thumbnail images respectively according to the zoom-out signal; and
a displaying module (108) for displaying the thumbnail images on the display panel (102) of the electronic device (100).

10. The electronic device (100) of claim 9, wherein while resizing the pages of contents, the image resizing module (106) further zooming out the displayed page of content towards to a predetermined position on the display panel (102).

11. The electronic device (100) of claim 9 or 10, wherein the zoom-out signal is generated according to a pinch gesture on the touch sensing module (104) corresponding to the displayed page of content displayed on the display panel (102).

12. The electronic device (100) of any of claims 9 to 11, wherein the pages of contents are contiguously arranged in a page flow (304) in an arranging order, and the thumbnail images displayed on the display panel (102) are arranged according to the arranging order of the pages of contents.

13. The electronic device (100) of claim 12, when the thumbnail images are displayed on the display panel (102) according to the arranging order of the pages of contents and the touch sensing module (104) further receives a dragging signal for dragging one of the thumbnail images, further comprising:
a sorting module (110) for changing the arranging order when the dragged thumbnail image is moved to be around any one of rest of the thumbnail images according to the dragging signal.

14. The electronic device (100) of claim 13, wherein the dragging signal is generated by a dragging gesture on the touch sensing module (104).

15. The electronic device (100) of claim 12, wherein, when the thumbnail images are displayed on the display panel (102) according to the arranging order, the touch sensing module (104) further receives a selecting signal for selecting one of the thumbnail images, the image resizing module (106) resizes the thumbnail images to be the pages of contents respectively according to the selecting signal and the displaying module (108) displays one of the pages of contents on the display panel (102) according to the selecting signal, wherein the displayed page of content corresponds to the selected thumbnail image and the pages of contents are contiguously arranged in the page flow (304) according to the arranging order.
